# EUROPEAN PATENT APPLICATION

(11) **EP 2 378 321 A1**
(43) Date of publication of application: **19.10.2011**
(21) Application number: 09801905.2
(22) Date of filing: 10.07.2009
(51) Int. Cl.: G02B 6/00, G02B 6/032

(54) **HOLEY FIBER**

(30) Priority: 15.12.2008 JP 2008318795
(71) Applicant: The Furukawa Electric Co., Ltd., Chiyoda-ku Tokyo 100-8322 (JP)
(72) Inventor: TAKAHASHI, Masanori, Tokyo 100-8322 (JP); IMAMURA, Katsunori, Tokyo 100-8322 (JP); MUKASA, Kazunori, Tokyo 100-8322 (JP); YAGI, Takeshi, Tokyo 100-8322 (JP)
(74) Representative: Jackson, Martin Peter
(86) International application number: PCT/JP2009/062588
(87) International publication number: WO 2010/070946

(57) **Abstract**

A core portion; and a cladding portion positioned around a periphery of the core portion and having holes arranged circularly around the core portion are included. Twelve to thirty-six of the holes are arranged circularly at a radius of 36 to 48 micrometers around an approximate center of the core portion, a hole diameter is in a range of 2.0 to 11.0 micrometers, and at a wavelength of 1064 nanometers, a single-mode operation is substantially performed and an effective core area is equal to or greater than 1500 µm². Accordingly, a holey fiber is provided, which is capable of propagating light in a form preferable for practical uses while achieving a substantial single-mode operation and low nonlinearity.

## Description

### TECHNICAL FIELD

The present invention relates to a holey fiber.

### BACKGROUND ART

A holey fiber is a new type of optical fiber that includes a core portion positioned at a core thereof, and a cladding portion having a plurality of holes arranged around the core portion. In this optical fiber, an average refractive index of the cladding portion is reduced by the holes, and the core portion is caused to propagate light using the principle of total reflection of light. In this holey fiber, because it is possible to reduce optical nonlinearity by increasing an effective core area, application of the optical fiber as a low-nonlinear transmission medium to optical communications or to power delivery to transmit high power light for laser machining and the like is expected.

To further increase an effective core area of a holey fiber, a holey fiber with a structure formed with holes forming only one layer around a core portion has been disclosed (Non-patent Literature 1). FIG. 22 is a schematic cross-sectional view of the holey fiber described in Non-patent Literature 1. A holey fiber 2 includes a core portion 2a, and a cladding portion 2b positioned around the core portion 2a and having 18 holes 2c formed around the core portion 2a. The holes 2c each have a hole diameter of d1, and are arranged on lattice points forming a hexagon selected from lattice points of a triangular lattice. According to Non-patent Literature 1, in the holey fiber 2 depicted in FIG. 22, when A, which is a lattice constant, i.e., an interval between the holes 2c, is 12.0 micrometers (µm) and d1/Λ is 0.48 (i.e., d1 is 5.76 micrometers), the effective core area becomes very large at 1400 µm² when a wavelength is 1064 nanometers, a confinement loss of the LP01 mode that is a fundamental mode of a propagation mode becomes small at equal to or smaller than 0.3 dB/m, a confinement loss of the LP11 mode that is a higher-order mode of second order becomes large at 1 dB/m, and thus the holey fiber 2 is considered to be capable of achieving a substantial single-mode operation. In Non-patent Literature 1, it is assumed that the holey fiber 2 of a length of 1 meter to 2 meters is used. Therefore, the holey fiber 2 is considered to perform the substantial single-mode operation as long as a difference between the confinement loss of the LP11 mode and the confinement loss of the LP01 mode for a total length is equal to or larger than 0.7 dB. Furthermore, a bending loss upon bending the holey fiber 2 with a radius of 100 millimeters is described to be about 4.4 to 4.5 dB/m. A distance r1 from a center 01 of the hexagon formed by the holes 2c to an apex is 36 micrometers when A is 12.0 micrometers as described above.

### PRIOR ART DOCUMENT

### NONPATENT LITERATURE

Non-patent Literature 1: Y. Tsuchida, et al., "Design of Single-Mode Leakage Channel Fibers with Large-Mode-Area and Low Bending Loss", OECC 2008, P-9

### DISCLOSURE OF INVENTION

### PROBLEM TO BE SOLVED BY THE INVENTION

For example, laser light beams used in laser machining are preferably isotropically circular. Therefore, it is preferable for a holey fiber to have a field distribution of propagated light that is circular. Further, it is also preferable for a holey fiber practically used in optical communications to have a field distribution of propagated light that is circular to reduce a connection loss with another optical fiber.

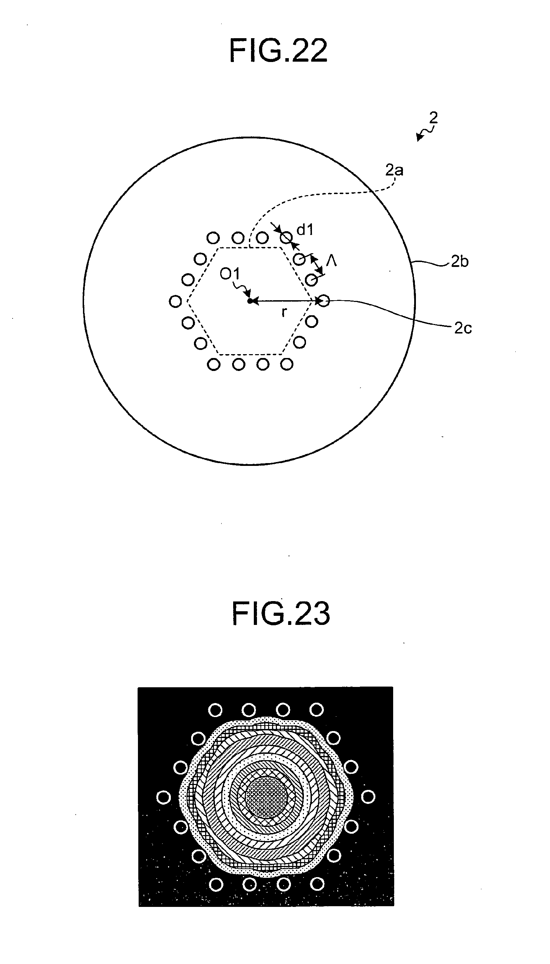

However, as a result of calculating a field distribution of light having a wavelength of 1064 nanometers propagated through the holey fiber 2 of the structure depicted in FIG. 22, the inventors of the present invention have found out the following. FIG. 23 depicts a field distribution of light having a wavelength of 1064 nanometers propagated through the holey fiber 2 depicted in FIG. 22. In FIG. 23, intensity of a field at a center portion is 1.0, and from the center, each range having the intensity attenuated by 10% is illustrated with a different hatching. As depicted in FIG. 23, the holey fiber 2 has a field distribution of light that is hexagonal, and thus has propagated light of a shape that is far from a preferable shape.

The present invention has been made in view of the above, and an object of the invention is to provide a holey fiber capable of propagating light in a form preferable for practical uses while achieving a substantial single-mode operation and low nonlinearity.

### MEANS FOR SOLVING PROBLEM

To solve the above described problems and achieve the object, a holey fiber according to the invention includes: a core portion; and a cladding portion positioned around a periphery of the core portion and having holes arranged circularly around the core portion. In this holey fiber, 12 to 36 of the holes are arranged circularly at a radius of 36 to 48 micrometers around an approximate center of the core portion, a hole diameter is in a range of 2.0 to 11.0 micrometers, and at a wavelength of 1064 nanometers, a single-mode operation is substantially performed and an effective core area is equal to or greater than 1500 µm².

Further, the holey fiber according to the invention further has a length for which a difference between a confinement loss of a fundamental mode and a confinement loss of a higher-order mode of second order in a total length is equal to or greater than 0.7 dB at the wavelength of 1064 nanometers.

Further, in the holey fiber according to the invention, a bending loss upon bending with a radius of 100 millimeters at the wavelength of 1064 nanometers is equal to or smaller than 10 dB/m.

### EFFECT OF THE INVENTION

The present invention achieves an effect that it is possible to realize a holey fiber capable of propagating light in a form preferable for practical uses while achieving a substantial single-mode operation and low nonlinearity.

### BRIEF DESCRIPTION OF DRAWINGS

[FIG. 1] FIG. 1 is a schematic cross-sectional view of a holey fiber according to an embodiment.
[FIG. 2] FIG. 2 depicts a field distribution of light having a wavelength of 1064 nanometers propagated through the holey fiber depicted in FIG. 1.
[FIG. 3] FIG. 3 depicts a relationship between a hole diameter d and a confinement loss of a fundamental mode when the number of holes n is 12.
[FIG. 4] FIG. 4 depicts a relationship between the hole diameter d and a confinement loss of a higher-order mode of second order when the number of holes n is 12.
[FIG. 5] FIG. 5 depicts a relationship between the hole diameter d and the confinement loss of the fundamental mode when the number of holes n is 18.
[FIG. 6] FIG. 6 depicts a relationship between the hole diameter d and the confinement loss of a higher-order mode when the number of holes n is 18.
[FIG. 7] FIG. 7 depicts a relationship between the hole diameter d and the confinement loss of the fundamental mode when the number of holes n is 24.
[FIG. 8] FIG. 8 depicts a relationship between the hole diameter d and the confinement loss of the higher-order mode when the number of holes n is 24.
[FIG. 9] FIG. 9 depicts a relationship between the hole diameter d and the confinement loss of the fundamental mode when the number of holes n is 36.
[FIG. 10] FIG. 10 depicts a relationship between the hole diameter d and the confinement loss of the higher-order mode when the number of holes n is 36.
[FIG. 11] FIG. 11 depicts values of the hole diameter d for a substantial single-mode operation with respect to combinations of a hole arrangement radius r and the number of holes n.
[FIG. 12] FIG. 12 depicts a relationship between the hole diameter d and an effective core area Aeff when the number of holes n is 12.
[FIG. 13] FIG. 13 depicts a relationship between the hole diameter d and the effective core area Aeff when the number of holes n is 18.
[FIG. 14] FIG. 14 depicts a relationship between the hole diameter d and the effective core area Aeff when the number of holes n is 24.
[FIG. 15] FIG. 15 depicts a relationship between the hole diameter d and the effective core area Aeff when the number of holes n is 36.
[FIG. 16] FIG. 16 depicts a relationship between the hole arrangement radius r and a bending loss when the number of holes n is 12.
[FIG. 17] FIG. 17 depicts a relationship between the hole arrangement radius r and the bending loss when the number of holes n is 18.
[FIG. 18] FIG. 18 depicts a relationship between the hole arrangement radius r and the bending loss when the number of holes n is 24.
[FIG. 19] FIG. 19 depicts a relationship between the hole arrangement radius r and the bending loss when the number of holes n is 36.
[FIG. 20] FIG. 20 depicts calculation examples 1 to 14 of some of the results depicted in FIGS. 3 to 19 and of an example with the hole arrangement radius r of 48 micrometers.
[FIG. 21] FIG. 21 depicts calculation examples 15 to 44 of a confinement loss, a bending loss, and a shortest length for combinations of the number of holes n, the hole diameter d, and the hole arrangement radius r.
[FIG. 22] FIG. 22 is a schematic cross-sectional view of a holey fiber described in Non-patent Literature 1.
[FIG. 23] FIG. 23 depicts a field distribution of light having a wavelength of 1064 nanometers propagated through the holey fiber depicted in FIG. 22.

### BEST MODE(S) FOR CARRYING OUT THE INVENTION

Embodiments of a holey fiber according to the present invention will be explained below in detail with reference to the accompanying drawings. The present invention is not limited by these embodiments. Terms not particularly defined in the present specification follow the definitions and measuring methods in the ITU-T (International Telecommunication Union) G.650.1.

### (Embodiment)

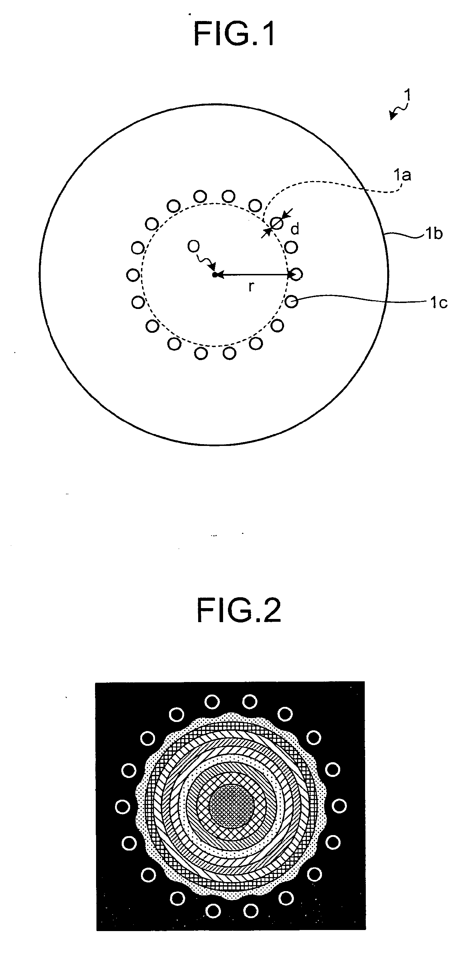

FIG. 1 is a schematic cross-sectional view of a holey fiber 1 according to an embodiment of the present invention. As depicted in FIG. 1, the holey fiber 1 includes a core portion 1a, and a cladding portion 1b positioned around a periphery of the core portion 1a. The core portion 1a and the cladding portion 1b are made of pure silica glass not added with a dopant for adjusting a refractive index.

The cladding portion 1b includes holes 1c arranged around the core portion 1a. The number of the holes 1c is 18, and the holes 1c are arranged circularly around a center 0 of the core portion 1a. A radius r of a circle formed by the holes 1c (hereinafter, "hole arrangement radius") is 36 micrometers. When a hole diameter (diameter) d of the holes 1c is 5.5 micrometers.

FIG. 2 depicts a field distribution of light having a wavelength of 1064 nanometers propagated through the holey fiber 1 depicted in FIG. 1. In FIG. 2, intensity of a field at a center portion is 1.0, and a different hatching is used to show, from the center, each range in which the intensity is attenuated by 10%. As depicted in FIG. 2, the holey fiber 1 has the field distribution of light that is circular, which is of a shape preferable for practical uses.

Further, because the number of holes, the hole arrangement radius, and the hole diameter of the holey fiber 1 are set as described above, when the wavelength is 1064 nanometers, an effective core area of the LP01 mode that is a fundamental mode becomes very large at 1812 µm² which is equal to or larger than 1500 µm², the confinement loss of the LP01 mode becomes small at 0.25 dB/m, which is equal to or smaller than 0.3 dB/m, and the confinement loss of the LP11 mode becomes large at 1.28 dB/m, which is equal to larger than 1 dB/m. Consequently, when a length equal to or larger than 1 meter is used, it is possible to achieve a substantial single-mode operation. Further, when the holey fiber 1 is bent with a diameter of 100 millimeters as is done when the holey fiber is wound around a bobbin or the like, the bending loss is about 4.4 dB/m, which is equal to or smaller than 10 dB/m, which is preferable for practical uses. Hereinafter, the bending loss refers to a bending loss upon bending with a radius of 100 millimeters.

Comparing the holey fiber 1 with the holey fiber 2 depicted in FIG. 22, the numbers of holes are the same, values of the hole arrangement radius r of the holey fiber 1 and the distance r1 of the holey fiber 2 are the same, and also values of the bending loss are substantially the same. However, the holey fiber 1 has a larger effective core area of 1812 µm².

In a holey fiber with holes circularly arranged similarly to those of the holey fiber 1 depicted in FIG. 1, if the number of holes n is 12 to 36, the hole arrangement radius r is 36 to 48 micrometers, and the hole radius d is in a range of 2.0 to 11.0 micrometers, it is possible to realize a holey fiber substantially achieving the single-mode operation at the wavelength of 1064 nanometers and having the effective core area equal to or larger than 1500 µm². Explanation is given below with reference to a calculation result using a finite element method (FEM) simulation.

A calculation result is explained for a holey fiber having holes circularly arranged similarly to those of the holey fiber 1 depicted in FIG. 1 when the number of holes n is set to be 12, 18, 24, and 36 and the hole arrangement radius r is set to be 36 micrometers, 39 micrometers, 42 micrometers, and 45 micrometers. The wavelength used in each calculation is 1064 nanometers.

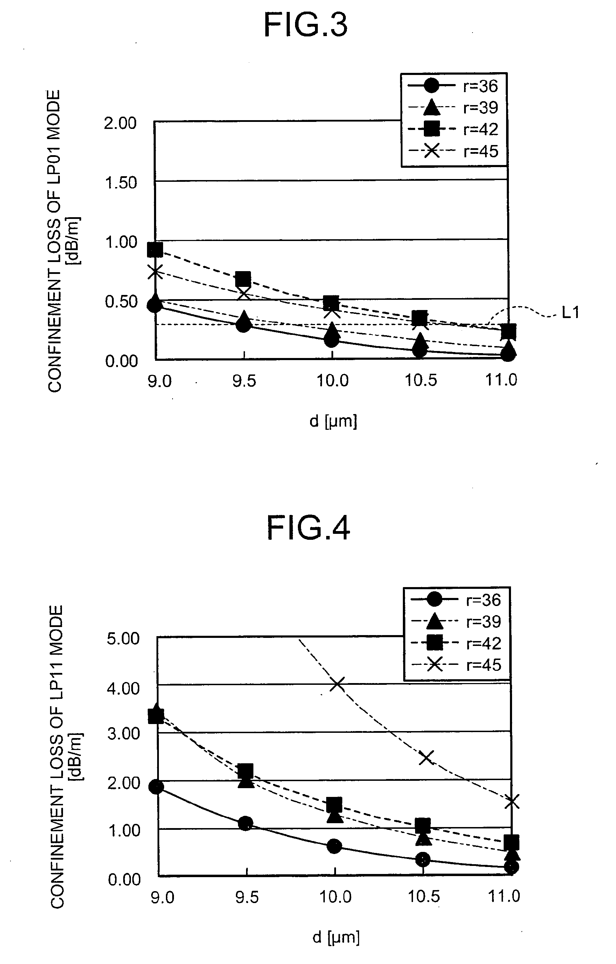

FIG. 3 depicts a relationship between the hole diameter d and the confinement loss of the fundamental mode when the number of holes n is 12. In FIG. 3, a line L1 indicates where the confinement loss is 0.3 dB/m. As depicted in FIG. 3, for each r, there is a range of d for which the confinement loss of the fundamental mode becomes equal to or smaller than 0.3 dB/m.

FIG. 4 depicts a relationship between the hole diameter d and the confinement loss of the higher-order mode of second order when the number of holes n is 12. As depicted in FIG. 4, for each r, there is a range of d for which the confinement loss of the higher-order mode of second order becomes equal to or larger than 1.0 dB/m. When the confinement loss of the higher-order mode of second order is equal to or larger than 1.0 dB/m, a confinement loss of a higher-order mode higher than the higher-order mode of second order is also equal to or larger than 1.0 dB/m. Therefore, only the higher-order mode of second order is considered below as the higher-order mode.

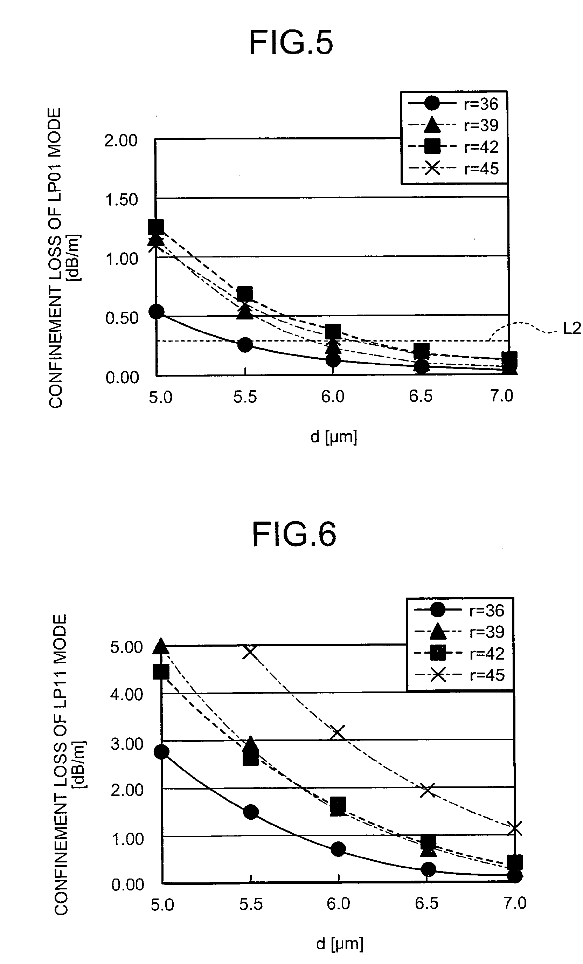

FIG. 5 depicts a relationship between the hole diameter d and the confinement loss of the fundamental mode when the number of holes n is 18. In FIG. 5, a line L2 indicates where the confinement loss is 0.3 dB/m. As depicted in FIG. 5, for each r, there is a range of d for which the confinement loss of the fundamental mode becomes equal to or smaller than 0.3 dB/m.

FIG. 6 depicts a relationship between the hole diameter d and the confinement loss of the higher-order mode when the number of holes n is 18. As depicted in FIG. 6, for each r, there is a range of d for which the confinement loss of the higher-order mode becomes equal to or larger than 1.0 dB/m.

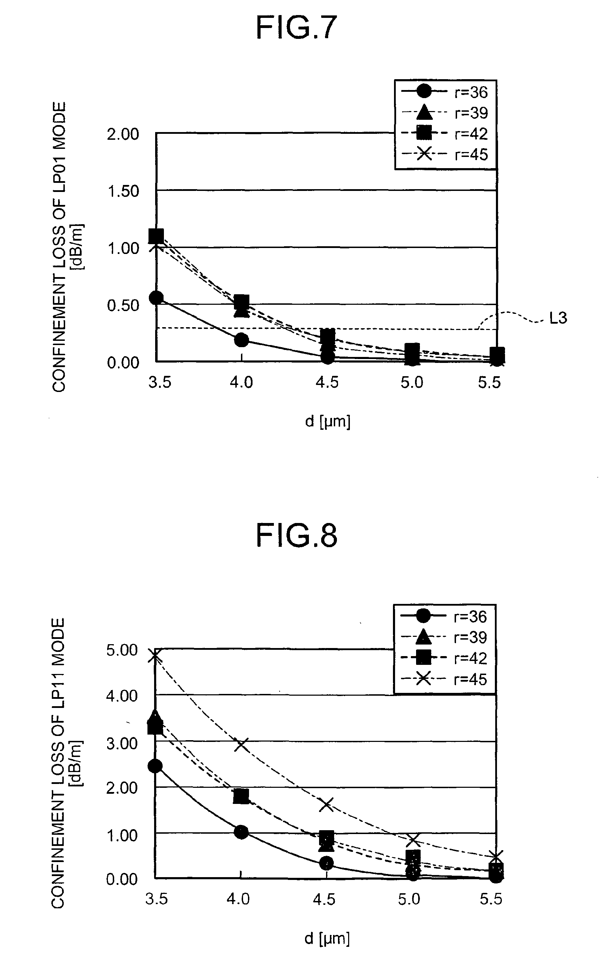

FIG. 7 depicts a relationship between the hole diameter d and the confinement loss of the fundamental mode when the number of holes n is 24. In FIG. 7, a line L3 indicates where the confinement loss is 0.3 dB/m. As depicted in FIG. 7, for each r, there is a range of d for which the confinement loss of the fundamental mode becomes equal to or smaller than 0.3 dB/m.

FIG. 8 depicts a relationship between the hole diameter d and the confinement loss of the higher-order mode when the number of holes n is 24. As depicted in FIG. 8, for each r, there is a range of d for which the confinement loss of the higher-order mode becomes equal to or larger than 1.0 dB/m.

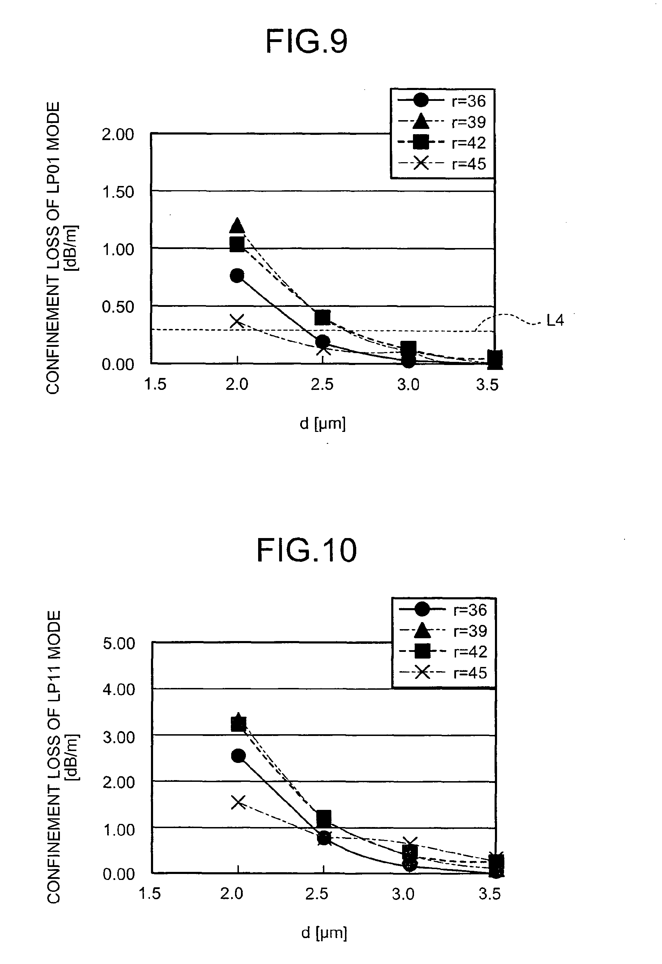

FIG. 9 depicts a relationship between the hole diameter d and the confinement loss of the fundamental mode when the number of holes n is 36. In FIG. 9, a line L4 indicates where the confinement loss is 0.3 dB/m. As depicted in FIG. 9, for each r, there is a range of d for which the confinement loss of the fundamental mode becomes equal to or smaller than 0.3 dB/m.

FIG. 10 depicts a relationship between the hole diameter d and the confinement loss of the higher-order mode when the number of holes n is 36. As depicted in FIG. 10, for each r, there is a range of d for which the confinement loss of the higher-order mode becomes equal to or larger than 1.0 dB/m.

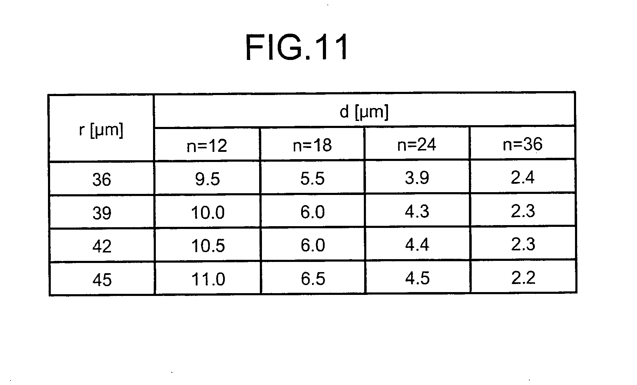

FIG. 11 depicts values of the hole diameter d at which the confinement loss of the fundamental mode is equal to or smaller than 0.3 dB/m, the confinement loss of the higher-order mode is equal to or larger than 1.0 dB/m, and the substantial single-mode operation is achieved, with respect to combinations of the hole arrangement radius r and the number of holes n. As depicted in FIG. 11, there are values of d at which the substantial single-mode operation is achieved for each combination of the hole arrangement radius r and the number of holes n. That is, d at which the substantial single-mode operation is achieved is in a range of 9.5 to 11.0 micrometers when the number of holes n is 12, in a range of 5.5 to 6.5 micrometers when the number of holes n is 18, in a range of 3.9 to 4.5 micrometers when the number of holes n is 24, and in a range of 2.2 to 2.4 micrometers when the number of holes n is 36.

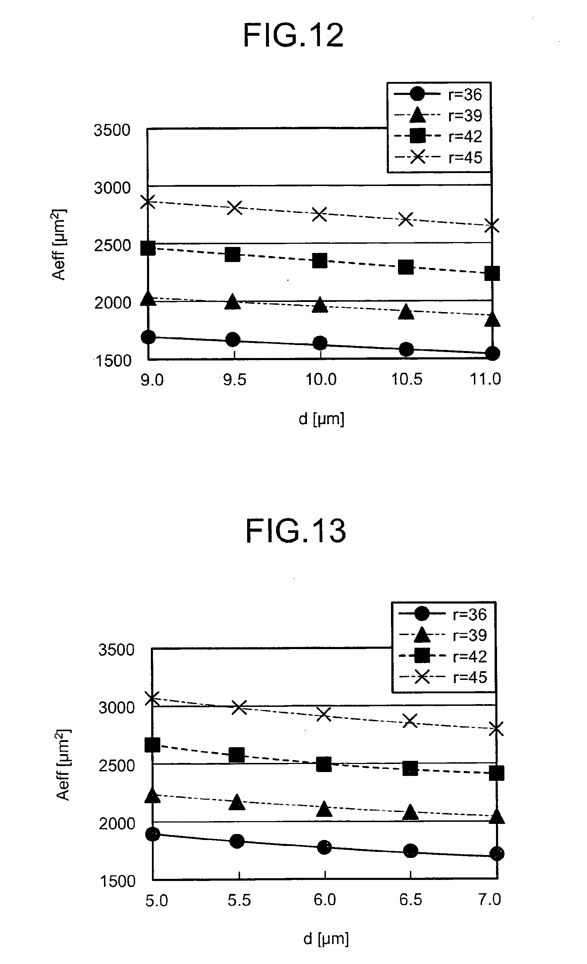

Next, FIG. 12 depicts a relationship between the hole diameter d and an effective core area Aeff when the number of holes n is 12. As depicted in FIG. 12, the effective core area Aeff is equal to or larger than 1500 µm² at d of 11.0 micrometers or smaller, for all of the values of the hole arrangement radius r.

FIG. 13 depicts a relationship between the hole diameter d and the effective core area Aeff when the number of holes n is 18. As depicted in FIG. 13, the effective core area Aeff is equal to or larger than 1500 µm² at d of 7.0 micrometers or smaller, for all of the values of the hole arrangement radius r.

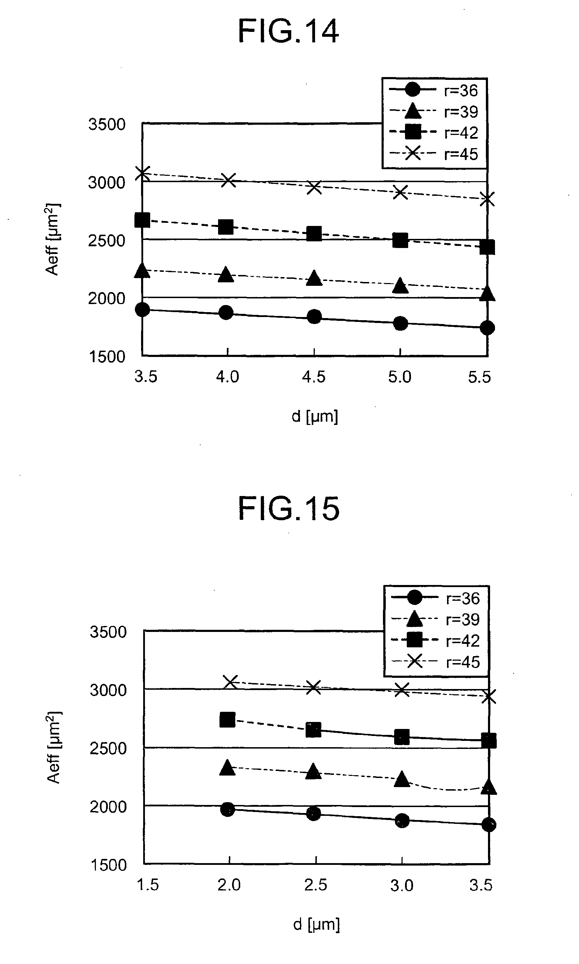

FIG. 14 depicts a relationship between the hole diameter d and the effective core area Aeff when the number of holes n is 24. As depicted in FIG. 14, the effective core area Aeff is equal to or larger than 1500 µm² at d of 5.5 micrometers or smaller, for all of the values of the hole arrangement radius r.

FIG. 15 depicts a relationship between the hole diameter d and the effective core area Aeff when the number of holes n is 36. As depicted in FIG. 15, the effective core area Aeff is equal to or larger than 1500 µm² at d in a range of 2.0 to 3.5 micrometers, for all of the values of the hole arrangement radius r.

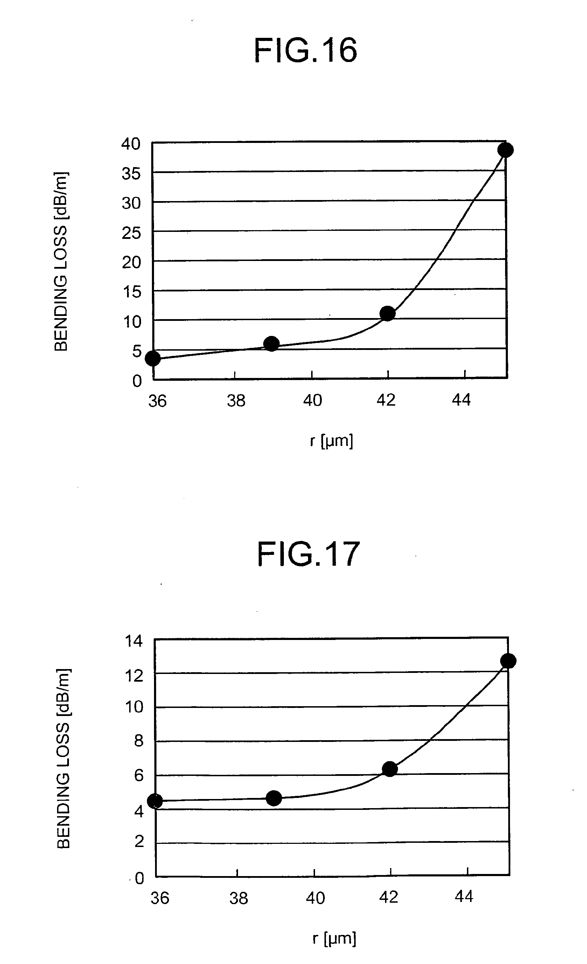

Next, FIG. 16 depicts a relationship between the hole arrangement radius r and the bending loss when the number of holes n is 12. The hole diameter d is set to be the values depicted in FIG. 11 according to each value of the hole arrangement radius r. For example, d is 9.5 µm when r is 36 µm. As depicted in FIG. 16, the bending loss of the holey fiber increases as the hole arrangement radius r is increased. Therefore, by setting the hole arrangement radius r to be equal to or smaller than a predetermined value as appropriate, it is possible to achieve a desired bending loss. For example, when r is 36 micrometers or 39 micrometers, the bending loss becomes 3.13 dB/m or 5.66 dB/m respectively, which is equal to or smaller than 10 dB/m.

FIG. 17 depicts a relationship between the hole arrangement radius r and the bending loss when the number of holes n is 18. The hole diameter d is set to be the values depicted in FIG. 11 according to each value of the hole arrangement radius r. As depicted in FIG. 17, when r is equal to or smaller than 42 micrometers, for example, the bending loss becomes equal to or smaller than 6.17 dB/m.

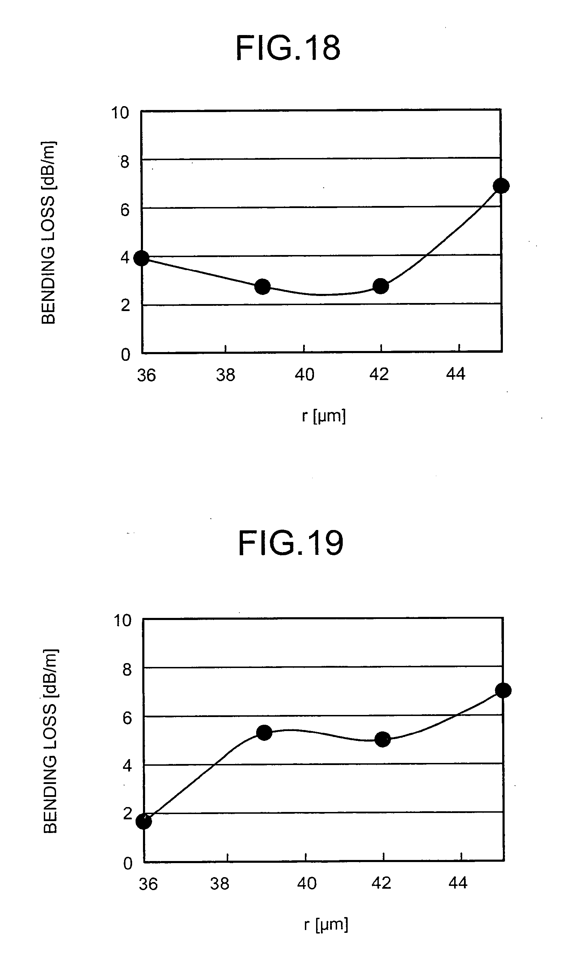

FIG. 18 depicts a relationship between the hole arrangement radius r and the bending loss when the number of holes n is 24. The hole diameter d is set to be the values depicted in FIG. 11 according to each value of the hole arrangement radius r. As depicted in FIG. 18, when r is equal to or smaller than 45 micrometers, for example, the bending loss becomes equal to or smaller than 6.82 dB/m.

FIG. 19 depicts a relationship between the hole arrangement radius r and the bending loss when the number of holes n is 36. The hole diameter d is set to be the values depicted in FIG. 11 according to each value of the hole arrangement radius r. As depicted in FIG. 19, when r is equal to or smaller than 45 micrometers, for example, the bending loss becomes equal to or smaller than 7.03 dB/m.

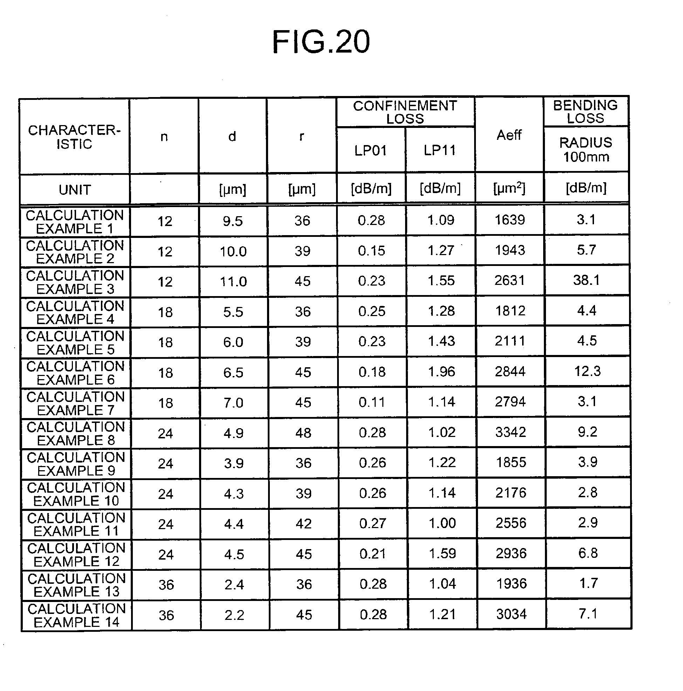

Next, FIG. 20 depicts calculation examples 1 to 14 of some of the results depicted in FIGS. 3 to 19 and of an example with the hole arrangement radius r of 48 micrometers. In FIG. 20, "n" represents the number of holes, "d" represents a hole diameter, "r" represents a hole arrangement radius, and "Aeff" represents an effective core area. As depicted in FIG. 20, in all of the calculation examples 1 to 14, the confinement loss is equal to or smaller than 0.3 dB/m in the LP01 mode, and is equal to or larger than 1.0 dB/m in the LP11 mode, the single-mode operation is substantially achieved, and the effective core area is equal to or larger than 1500 µm². In the calculation examples 1, 2, 4, 5, and 7 to 14, the bending loss is equal to or smaller than 10 dB/m.

In FIGS. 11 and 20, the confinement loss of the LP01 mode equal to or smaller than 0.3 dB/m and the confinement loss of the LP11 mode equal to larger than 1.0 dB/m are considered to be conditions of the substantial single-mode operation, and combinations of the number of holes n, the hole diameter d, and the hole arrangement radius r satisfying these conditions are depicted. However, these conditions of the confinement loss are assumed for a case of using the holey fiber of about 1 meter in length, and the holey fiber according to the present invention is not limited thereto. For example, as depicted in FIGS. 3 to 10, even if the confinement loss of the LP01 mode is larger than 0.3 dB/m or the confinement loss of the LP11 mode is smaller than 1.0 dB/m, as long as the holey fiber has a length for which a difference between the confinement loss of the LP01 mode and the confinement loss of the LP11 mode in a total length is equal to or larger than 0.7 dB, it is possible to achieve the substantial single-mode operation. Therefore, such a holey fiber is included in the present invention.

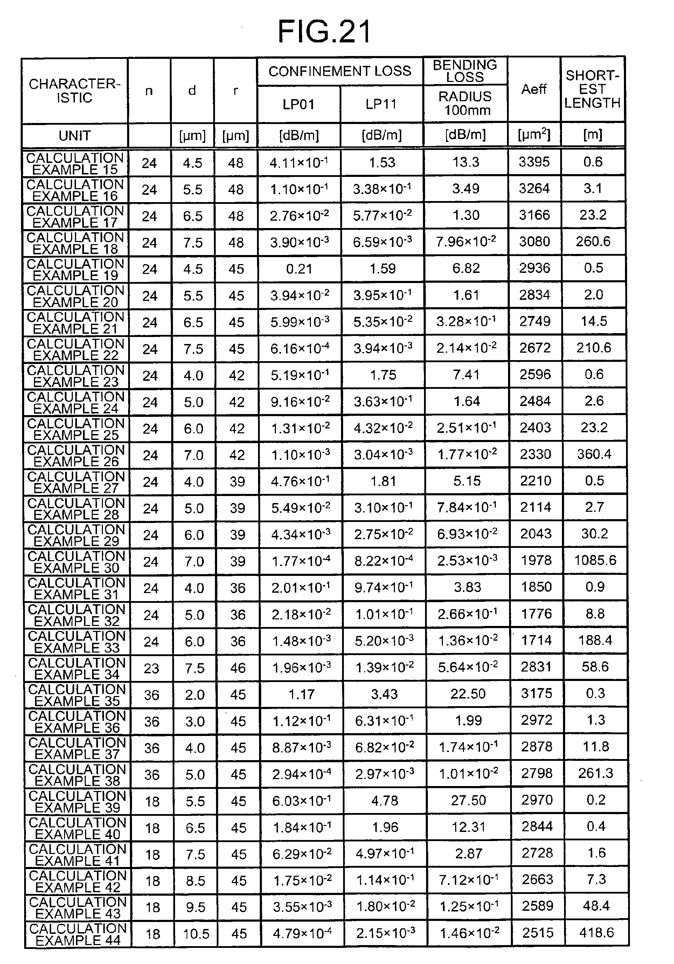

FIG. 21 depicts calculation examples 15 to 44 of a confinement loss, a bending loss, and a shortest length for combinations of the number of holes n, the hole diameter d, and the hole arrangement radius r. In these calculation examples 15 to 44, the structure of the holey fiber is similar to that of the holey fiber 1 depicted in FIG. 1. The shortest length refers to the shortest length at which the difference between the confinement loss of the LP01 mode and the confinement loss of the LP11 mode in a total length becomes 0.7 dB or greater, i.e., a length at which the difference becomes 0.7 dB. This shortest length is expressed as 0.7/(B-A) [m], where A [dB/m] represents a value of the confinement loss of the LP01 mode, and B [dB/m] represents a value of the confinement loss of the LP11 mode.

For example, in the calculation example 15 in FIG. 21, while the confinement loss of the LP01 mode is 0.411 dB/m, which is larger than 0.3 dB/m, the shortest length is 0.6 meter. That is, for the combination of the number of holes n of 24, the hole diameter d of 4.5 micrometers, and the hole arrangement radius r of 48 micrometers as in the calculation example 15, the substantial single-mode operation is achieved even if the length is very short at 0.6 meter.

In the calculation example 18, while the confinement loss of the LP11 mode is 6.59 × 10⁻³ dB/m, which is considerately smaller than 1.0 dB/m, the shortest length is 260.6 meters. That is, for the combination of the number of holes n of 24, the hole diameter d of 7.5 micrometers, and the hole arrangement radius r of 48 micrometers as in the calculation example 18, the substantial single-mode operation is achieved when the length is made equal to or larger than 260.6 meters.

In the calculation example 19, the shortest length is 0.5 meter. That is, for the combination of the number of holes n of 24, the hole diameter d of 4.5 micrometers, and the hole arrangement radius r of 45 micrometers as in the calculation example 19, a substantial single-mode operation is achieved even when the length is very short at 0.5 meter.

In the calculation example 22, when the confinement loss of the LP11 mode is 3.94 × 10⁻³ dB/m, which is much smaller than 1.0 dB/m, the shortest length is 210.6 meters. That is, in the combination of the number of holes n of 24, the hole diameter d of 7.5 micrometers, and the hole arrangement radius r of 45 micrometers as in the calculation example 22, a substantial single-mode operation is achieved when the length is made equal to or larger than 210.6 meters.

In the calculation example 18, while the number of holes n and the hole arrangement radius r are the same as those in the calculation example 15, the hole diameter d is set larger. Similarly, in the calculation example 22, the hole diameter d is set larger than that in the calculation example 19. When the hole diameter d is set larger in this way, confinement of light into the core portion increases. Therefore, it is possible to obtain a holey fiber that has a small bending loss, for which mode coupling of the fundamental mode and the higher-order mode due to bending is suppressed, and the single-mode operation is more infallibly maintained. For example, the bending loss is 7.96 × 10⁻² dB/m in the calculation example 18 and is 2.14 × 10⁻² dB/m in the calculation example 22, which are equal to or smaller than 0.1 dB/m.

In all of the calculation examples 15 to 44 in FIG. 21, the effective core area of the LP01 mode is equal to larger than 1500 µm²

In FIG. 21, a shortest length of the holey fiber for which the difference between the confinement loss of the LP01 mode and the confinement loss of the LP11 mode becomes equal to or larger than 0.7 dB in the total length is illustrated. It is possible to achieve the single mode operation more infallibly and thus it is even more preferable if the holey fiber has a length for which the difference between the confinement losses becomes equal to or larger than 3.0 dB. To make the difference between the confinement losses equal to or larger than 3.0 dB, if a value of the confinement loss of the LP01 mode is 1.96 × 10⁻³ dB/m and a value of the confinement loss of the LP11 mode is 1.39 × 10⁻² dB/m, the length is set to be equal to or larger than 251.3 meters (= 3.0 / (1.39 × 10⁻² - 1.96 × 10⁻³), as illustrated by the calculation example 33.

The holey fiber according to the present invention may be manufactured by the following method. For example, a stack-and-draw method of arranging a solid glass rod to be a core portion near a center axis of a hollow glass tube, arranging hollow glass capillaries to form holes around the glass rod, forming an optical-fiber preform by further filling a solid glass rod around them, and fiber drawing the preform. According to this method, the glass capillaries for forming the holes around the glass rod to be the core portion are naturally arranged along a clean circle, and thus it is possible to manufacture the holey fiber easily. Further, instead of this method, a method of perforating holes in a circular arrangement through a glass rod optical-fiber preform, and fiber drawing may be used.

### INDUSTRIAL APPLICABILITY

As described above, the holey fiber according to the present invention is useful for optical communications or power delivery or the like, and is particularly suitable for transmitting high-power light.

### EXPLANATIONS OF LETTERS OR NUMERALS

- 1, 2: holey fiber
- a, 2a: core portion
- 1b, 2b: cladding portion
- 1c, 2c: hole
- L1 to L4: line
- O, O1: center

## Claims

1. A holey fiber comprising:
a core portion; and
a cladding portion positioned around a periphery of the core portion and having holes arranged circularly around the core portion, wherein
12 to 36 of the holes are arranged circularly at a radius of 36 to 48 micrometers around an approximate center of the core portion,
a hole diameter is in a range of 2.0 to 11.0 micrometers, and
at a wavelength of 1064 nanometers, a single-mode operation is substantially performed and an effective core area is equal to or greater than 1500 µm².

2. The holey fiber according to claim 1, further comprising a length for which a difference between a confinement loss of a fundamental mode and a confinement loss of a higher-order mode of second order in a total length is equal to or greater than 0.7 dB at the wavelength of 1064 nanometers.

3. The holey fiber according to claim 1 or 2, wherein a bending loss upon bending with a radius of 100 millimeters at the wavelength of 1064 nanometers is equal to or smaller than 10 dB/m.
